(19) Europäisches Patentamt
European Patent Office
Office européen des brevets

(11) EP 0 844 817 B1

(12) EUROPÄISCHE PATENTSCHRIFT

(45) Veröffentlichungstag und Bekanntmachung des Hinweises auf die Patenterteilung: **22.09.1999 Patentblatt 1999/38**

(21) Anmeldenummer: **96927062.8**

(22) Anmeldetag: **30.07.1996**

(51) Int. Cl.$^6$: **A01N 37/50**
// (A01N37/50, 43:54)

(86) Internationale Anmeldenummer: **PCT/EP96/03353**

(87) Internationale Veröffentlichungsnummer: **WO 97/06677 (27.02.1997 Gazette 1997/10)**

# (54) FUNGIZIDE MISCHUNGEN EINES OXIMETHERCARBONSÄUREAMIDS MIT ANILINOPYRIMIDINEN

FUNGICIDAL MIXTURES OF AN OXIMETHER CARBOXYLIC ACID AMIDE WITH ANILINOPYRIMIDINES

MELANGES FONGICIDES D'UN AMIDE D'ACIDE CARBOXYLIQUE D'OXIMETHER AVEC DES ANILINOPYRIMIDINES

(84) Benannte Vertragsstaaten:
**AT BE CH DE DK ES FI FR GB GR IE IT LI NL PT SE**

(30) Priorität: **17.08.1995 DE 19530174**

(43) Veröffentlichungstag der Anmeldung: **03.06.1998 Patentblatt 1998/23**

(73) Patentinhaber:
**BASF AKTIENGESELLSCHAFT**
**67056 Ludwigshafen (DE)**

(72) Erfinder:
- **SCHWALGE, Barbara**
  **D-69115 Heidelberg (DE)**
- **MÜLLER, Ruth**
  **D-67159 Friedelsheim (DE)**
- **BAYER, Herbert**
  **D-68159 Mannheim (DE)**
- **SAUTER, Hubert**
  **D-68167 Mannheim (DE)**
- **AMMERMANN, Eberhard**
  **D-64646 Heppenheim (DE)**
- **LORENZ, Gisela**
  **D-67434 Hambach (DE)**
- **STRATHMANN, Siegfried**
  **D-67117 Limburgerhof (DE)**

(56) Entgegenhaltungen:
**EP-A- 0 642 735**
**WO-A-95/15083**
**WO-A-95/21154**
**GB-A- 2 267 644**
**GB-A- 2 279 568**

- **RESEARCH DISCLOSURE, Nr. 348, 1.April 1993, Seite 267, COMPL XP000304224 "MIXTURES OF FUNGICIDES AND HERBICIDES"**
- **PESTICIDE SCIENCE, Bd. 44, Nr. 1, Mai 1995, BARKING GB, Seiten 77-79, XP002020496 P.J.DE FRAIN ET AL.: "A New Series of Broad-Spectrum beta-Methoxyacrylate Fungicides with an Oxime Ether Side-Chain"**
- **RESEARCH DISCLOSURE, Nr. 346, 1.Februar 1993, Seite 158 XP000360748 "MIXTURES OF FUNGICIDES"**
- **RESEARCH DISCLOSURE, Nr. 370, 1.Februar 1995, Seite 68 XP000504452 "MIXTURES OF FUNGICIDES"**
- **DATABASE CROPU STN-International STN-accession no. 95-81855, E.AMMERMANN ET AL.: "BAS 490 F - a broad-spectrum strobilurin fungicide." XP002020497 & MITT.BIOL.BUNDESANST.LANDFORSTWIRTSCH., Nr. 301, 1994, Seite 397**
- **DATABASE CROPU STN-International STN-accession no. 95-81869, U.HAASE ET AL.: "Action mechanism of the strobilurin derivative BAS 490F" XP002020498 & MITT.BIOL.BUNDESANST.LANDFORSTWIRTSCH., Nr. 301, 1994, Seite 411**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Xerox (UK) Business Services
2.16.7/3.6

**Beschreibung**

Die vorliegende Erfindung betrifft eine fungizide Mischung, welche

a) ein Oximethercarbonsäureamid der Formel I,

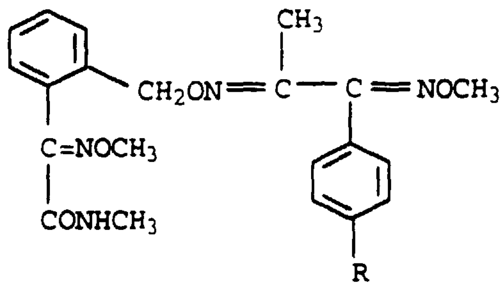

in der R für Wasserstoff oder Halogen steht
und

b) ein Pyrimidinderivat der Formel II,

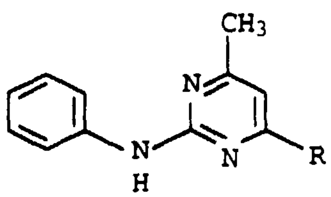

II

in der R für Methyl, Propin-1-yl oder Cyclopropyl steht

in einer synergistisch wirksamen Menge enthalt.

Außerdem betrifft die Erfindung Verfahren zur Bekämpfung von Schadpilzen mit den Verbindungen I und II oder sie enthaltenden synergistischen Mischungen und die Verwendung der Verbindungen I bzw. der Verbindungen II zur Herstellung derartiger Mischungen. Verbindungen der Formel I, ihre Herstellung und ihre Wirkung gegen Schadpilze sind aus der Literatur bekannt (WO-A 95/18,789).

Ebenfalls bekannt sind die Pyrimidinderivate II, deren Herstellung und deren Wirkung gegen Schadpilze [R = Methyl: DD-A 151 404 (common name: Pyrimethanil); R = 1-Propinyl: EP-A 224 339 (common name: Mepanipyrim); R=Cyclopropyl: EP-A 310 550].

Im Hinblick auf eine Senkung der Aufwandmengen und eine Verbesserung des Wirkungsspektrums der bekannten Verbindungen lagen der vorliegenden Erfindungen Mischungen zugrunde, die bei verringerter Gesamtmenge an ausgebrachten Wirkstoffen eine verbesserte Wirkung gegen Schadpilzen aufweisen (synergistische Mischungen).

Demgemäß wurden die eingangs definierten Mischungen gefunden. Es wurde außerdem gefunden, daß sich bei gleichzeitiger gemeinsamer oder getrennter Anwendung der Verbindungen I und der Verbindungen II oder bei Anwendung der Verbindungen I und der Verbindungen II nacheinander Schadpilze besser bekämpfen lassen als nur mit den Verbindungen I oder II.

R in der Formel I steht für Wasserstoff oder ein Halogenatom wie Fluor, Chlor, Brom und lod, besonders Wasserstoff, Fluor und Chlor, insbesondere Wasserstoff oder Fluor.

Die Verbindungen der Formel I können in Bezug auf die C=N-Doppelbindung in der E- oder der Z-Konfiguration (in Bezug auf die Gruppierung CO-$NHCH_3$) vorliegen. Demgemäß können sie in der erfindungsgemäßen Mischung entweder als reine Isomere oder als E/Z-Isomerenmischung Verwendung finden. Bevorzugt findet die E/Z-Isomerenmischung oder das E-Isomere Anwendung, wobei in vielen Fällen das E-Isomere besonders bevorzugt ist.

Die C=N-Doppelbindungen der Oximethergruppierungen in der Seitenkette der Verbindungen I können jeweils als reine E- oder Z-Isomere oder als E/Z-Isomerengemische vorliegen. Die Verbindungen I können sowohl als Isomerengemische als auch als reine Isomere in den erfindungsgemäßen Mischungen verwendet werden. Im Hinblick auf ihre Verwendung werden insbesondere Verbindungen I bevorzugt, in denen beide Oximethergruppierungen in der Seitenkette in der E-Konfiguration vorliegen (E/E).

Die Pyrimidinderivate der Formel II sind wegen des basischen Charakters der NH-Gruppierung in der Lage, mit anorganischen oder organischen Säuren oder mit Metallionen Salze zu bilden.

Beispiele für anorganische Sauren sind Halogenwasserstoffsauren wie Fluorwasserstoff, Chlorwasserstoff, Bromwasserstoff und Jodwasserstoff, Schwefelsäure, Phosphorsäure und Salpetersäure.

Als organischen Säuren kommen beispielsweise Ameisensäure, Kohlensäure und Alkansäuren wie Essigsäure, Trifluoressigsäure, Trichloressigsäure und Propionsäure sowie Glycolsäure, Thiocyansäure, Milchsäure, Bernsteinsäure, Zitronensäure, Benzoesäure, Zimtsäure, Oxalsäure, Alkylsulfonsäuren (Sulfonsäuren mit geradkettigen oder verzweigten Alkylresten mit 1 bis 20 Kohlenstoffatomen), Arylsulfonsäuren oder -disulfonsäuren (aromatische Reste wie Phenyl und Naphthyl welche eine oder zwei Sulfonsäuregruppen tragen), Alkylphosphonsäuren (Phosphonsäuren mit geradkettigen oder verzweigten Alkylresten mit 1 bis 20 Kohlenstoffatomen), Arylphosphonsäuren oder -diphosphonsäuren (aromatische Reste wie Phenyl und Naphthyl welche eine oder zwei Phosphorsäurereste tragen), wobei die Alkyl- bzw. Arylreste weitere Substituenten tragen können, z.B. p-Toluolsulfonsäure, Salizylsäure, p-Aminosalizylsäure, 2-Phenoxybenzoesäure, 2-Acetoxybenzoesäure etc.

Als Metallionen kommen insbesondere die Ionen der Elemente der zweiten Hauptgruppe, insbesondere Calcium und Magnesium, der dritten und vierten Hauptgruppe, insbesondere Aluminium, Zinn und Blei, sowie der ersten bis achten Nebengruppe, insbesondere Chrom, Mangan, Eisen, Kobalt, Nickel, Kupfer, Zink und andere in Betracht. Besonders bevorzugt sind die Metallionen der Elemente der Nebengruppen der vierten Periode. Die Metalle können dabei in den verschiedenen ihnen zukommenden Wertigkeiten vorliegen.

Bevorzugt setzt man bei der Bereitstellung der Mischungen die reinen Wirkstoffe I und II ein, denen man je nach Bedarf weitere Wirkstoffe gegen Schadpilze oder andere Schädlinge wie Insekten, Spinntiere oder Nematoden, oder auch herbizide oder wachstumsregulierende Wirkstoffe oder Düngemittel beimischen kann.

Die Mischungen der Verbindungen I und II bzw. die gleichzeitige gemeinsame oder getrennte Verwendung der Verbindungen I und II zeichnen sich durch eine hervorragende Wirkung gegen ein breites Spektrum von pflanzenpathogenen Pilzen, insbesondere aus der Klasse der Ascomyceten und Basidiomyceten, aus. Sie sind z.T. systemisch wirksam und können daher auch als Blatt- und Bodenfungizide eingesetzt werden.

Besondere Bedeutung haben sie für die Bekämpfung einer Vielzahl von Pilzen an verschiedenen Kulturpflanzen wie Baumwolle, Gemüsepflanzen (z.B. Gurken, Bohnen und Kürbisgewächse), Gerste, Gras, Hafer, Kaffee, Mais, Obstpflanzen, Reis, Roggen, Soja, Wein, Weizen, Zierpflanzen, Zuckerrohr und einer Vielzahl von Samen.

Insbesondere eignen sie sich zur Bekämpfung der folgenden pflanzenpathogenen Pilze: Erysiphe graminis (echter Mehltau) an Getreide, Erysiphe cichoracearum und Sphaerotheca fuliginea an Kürbisgewächsen, Podosphaera leucotricha an Äpfeln, Uncinula necator an Reben, Puccinia-Arten an Getreide, Rhizoctonia-Arten an Baumwolle und Rasen, Ustilago-Arten an Getreide und Zuckerrohr, Venturia inaeoualis (Schorf) an Äpfeln, Helminthosporium-Arten an Getreide, Rhynchosporium secalis in Getreide, Septoria nodorum an Weizen, Botrytis cinera (Grauschimmel) an Erdbeeren und Reben, Cercospora arachidicola an Erdnüssen, Pseudocercosporella herpotrichoides an Weizen und Gerste, Pyricularia oryzae an Reis, Phytophthora infestans an Kartoffeln und Tomaten, Plasmopara viticola an Reben, Alternaria-Arten an Gemüse und Obst sowie Fusarium- und Verticillium-Arten.

Sie sind außerdem im Materialschutz (z.B. Holzschutz) anwendbar, beispielsweise gegen Paecilomyces variotii.

Die Verbindungen I und II können gleichzeitig gemeinsam oder getrennt oder nacheinander aufgebracht werden, wobei die Reihenfolge bei getrennter Applikation im allgemeinen keine Auswirkung auf den Bekämpfungserfolg hat.

Die Verbindungen I und II werden üblicherweise in einem Gewichtsverhältnis von 20:1 bis 0.1:2, vorzugsweise 10:1 bis 0.1:1, insbesondere 5:1 bis 0.2:1 angewendet.

Die Aufwandmengen der erfindungsgemäßen Mischungen liegen je nach Art des gewünschten Effekts bei 0,01 bis 3 kg/ha, vorzugsweise 0,1 bis 1,5 kg/ha, insbesondere 0,4 bis 1,0 kg/ha. Die Aufwandmengen liegen dabei für die Verbindungen I bei 0,01 bis 0,5 kg/ha, vorzugsweise 0,05 bis 0,5 kg/ha, insbesondere 0,05 bis 0,2 kg/ha. Die Aufwandmengen für die Verbindungen II liegen entsprechend bei 0,1 bis 1,0 kg/ha, vorzugsweise 0,4 bis 1,0 kg/ha, insbesondere 0,4 bis 0,8 kg/ha.

Bei der Saatgutbehandlung werden im allgemeinen Aufwandmengen an Mischung von 0,001 bis 50 g/kg Saatgut, vorzugsweise 0,01 bis 10 g/kg, insbesondere 0,01 bis 8 g/kg verwendet.

Sofern für Pflanzen pathogene Schadpilze zu bekämpfen sind erfolgt die getrennte oder gemeinsame Applikation der Verbindungen I und II oder der Mischungen aus den Verbindungen I und II durch besprühen oder bestäuben der Samen, der Pflanzen oder der Böden vor oder nach der Aussaat der Pflanzen oder vor oder nach dem Auflaufen der Pflanzen.

Die erfindungsgemäßen fungiziden synergistischen Mischungen bzw. die Verbindungen I und II können beispielsweise in Form von direkt versprühbaren Lösungen, Pulver und Suspensionen oder in Form von hochprozentigen wäßrigen, öligen oder sonstigen Suspensionen, Dispersionen, Emulsionen, Oldispersionen, Pasten, Stäubemitteln,

Streumitteln oder Granulaten aufbereitet und durch Versprühen, Vernebeln, Verstäuben, Verstreuen oder Gießen angewendet werden. Die Anwendungsform ist abhängig vom Verwendungszweck; sie soll in jedem Fall eine möglichst feine und gleichmäßige Verteilung der erfindungsgemäßen Mischung gewährleisten.

Die Formulierungen werden in an sich bekannter Weise hergestellt, z.B. durch Zugabe von Lösungsmitteln und/oder Trägerstoffen. Den Formulierungen werden üblicherweise inerte Zusatzstoffe wie Emulgiermittel oder Dispergiermittel beigemischt.

Als oberflächenaktive Stoffe kommen die Alkali-, Erdalkali-, Ammoniumsalze von aromatischen Sulfonsäuren, z.B. Lignin-, Phenol-, Naphthalin- und Dibutylnaphthalinsulfonsäure, sowie von Fettsäuren, Alkyl- und Alkylarylsulfonaten, Alkyl-, Laurylether- und Fettalkoholsulfaten, sowie Salze sulfatierter Hexa-, Hepta- und Octadecanole oder Fettalkoholglycolethern, Kondensationsprodukte von sulfoniertem Naphthalin und seinen Derivaten mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctyl-, Octyl- oder Nonylphenol, Alkylphenol- oder Tributylphenylpolyglycolether, Alkylarylpolyetheralkohole, Isotridecylalkohol, Fettalkoholethylenoxid- Kondensate, ethoxyliertes Rizinusöl, Polyoxyethylenalkylether oder Polyoxypropylen, Laurylalkoholpolyglycoletheracetat, Sorbitester, Lignin-Sulfitablaugen oder Methylcellulose in Betracht.

Pulver Streu- und Stäubemittel können durch Mischen oder gemeinsames Vermahlen der Verbindungen I oder II oder der Mischung aus den Verbindungen I und II mit einem festen Trägerstoff hergestellt werden.

Granulate (z.B. Umhüllungs-, Imprägnierungs- oder Homogengranulate) werden üblicherweise durch Bindung des Wirkstoffs oder der Wirkstoffe an einen festen Trägerstoff hergestellt.

Als Füllstoffe bzw. feste Tragerstoffe dienen beispielsweise Mineralerden wie Silicagel, Kieselsäuren, Kieselgele, Silikate, Talkum, Kaolin, Kalkstein, Kalk, Kreide, Bolus, Löß, Ton, Dolomit, Diatomeenerde, Kalzium- und Magnesiumsulfat, Magnesiumoxid, gemahlene Kunststoffe, sowie Düngemittel wie Ammoniumsulfat, Ammoniumphosphat, Ammoniumnitrat, Harnstoffe und pflanzliche Produkte wie Getreidemehl, Baumrinden-, Holz- und Nußschalenmehl, Cellulosepulver oder andere feste Trägerstoffe.

Die Formulierungen enthalten im allgemeinen 0,1 bis 95 Gew.-%, vorzugsweise 0,5 bis 90 Gew.-% einer der Verbindungen I oder II bzw. der Mischung aus den Verbindungen I und II. Die Wirkstoffe werden dabei in einer Reinheit von 90 % bis 100 %, vorzugsweise 95 % bis 100 % (nach NMR- oder HPLC-Spektrum) eingesetzt.

Die Verbindungen I oder II bzw. die Mischungen oder die entsprechenden Formulierungen werden angewendet, indem man die Schadpilze, die von ihnen freizunaltenden Pflanzen, Samen, Böden, Flächen, Materialien oder Räume mit einer fungizid wirksamen Menge der Mischung, bzw. der Verbindungen I und II bei getrennter Ausbringung, behandelt. Die Anwendung kann vor oder nach dem Befall durch die Schadpilze erfolgen.

Beispiele zur synergistischen Wirkung der erfindungsgemäßen Mischungen gegen Schadpilze

Die fungizide Wirkung der Verbindungen und der Mischungen ließ sich durch folgende Versuche zeigen:

Die Wirkstoffe wurden getrennt oder gemeinsam als 10 %-ige Emulsion in einem Gemisch aus 70 Gew.-% Cyclohexanon, 20 Gew.-% Nekanil® LN (Lutensol® AP6, Netzmittel mit Emulgier- und Dispergierwirkung auf der Basis ethoxylierter Alkylphenole) und 10 Gew.-% Emulphor® EL (Emulan® EL, Emulgator auf der Basis ethoxylierter Fettalkohole) aufbereitet und entsprechend der gewünschten Konzentration mit Wasser verdünnt.

Die Auswertung erfolgte durch Feststellung der befallenen Blattflächen in Prozent. Diese Prozent-Werte wurden in Wirkungsgrade umgerechnet. Die zu erwartenden Wirkungsgrade der Wirkstoffmischungen wurden nach der Colby Formel [R.S. Colby, Weeds 15, 20-22 (1967)] ermittelt und mit den beobachteten Wirkungsgraden verglichen.

Colby Formel:

$$E = x + y - x \cdot y/100$$

E zu erwartender Wirkungsgrad, ausgedrückt in % der unbehandelten Kontrolle, beim Einsatz der Mischung aus den Wirkstoffen A und B in den Konzentrationen a und b

x der Wirkungsgrad, ausgedrückt in % der unbehandelten Kontrolle, beim Einsatz des Wirkstoffs A in der Konzentration a

y der Wirkungsgrad, ausgedrückt in % der unbehandelten Kontrolle, beim Einsatz des Wirkstoffs B in der Konzentration b

Der Wirkungsgrad (W) wurde nach der Formel von Abbot wie folgt berechnet:

$$W = (1 - \alpha) \cdot 100/\beta$$

α entspricht dem Pilzbefall der behandelten Pflanzen in % und

β entspricht dem Pilzbefall der unbehandelten (Kontroll-) Pflanzen in %

Bei einem Wirkungsgrad von 0 entspricht der Befall der behandelten Pflanzen demjenigen der unbehandelten Kontrollpflanzen; bei einem Wirkungsgrad von 100 wiesen die behandelten Pflanzen keinen Befall auf.

**Wirkung gegen Puccinia recondita** (*Weizenbraunrost*)

Blätter von Weizensämlingen (Sorte "Kanzler") wurden mit Sporen des Braunrosts (*Puccinia recondita*) bestäubt. Die so behandelten Pflanzen wurden 24h bei 20-22°C und einer relativen Luftfeuchtigkeit von 90-95% inkubiert und anschließend mit der wäßrigen Wirkstoffaufbereitung behandelt. Nach weiteren 8 Tagen bei 20-22°C und 65-70% relativer Luftfeuchtigkeit wurde das Ausmaß der Pilzentwicklung ermittlelt. Die Auswertung erfolgte visuell.

Die Ergebnisse der Versuche sind in den folgenden Tabellen zusammengestellt:

Aktivität der Wirkstoffe bei getrennter Applikation:

| Wirkstoff | Aufwandmenge [ppm] | Wirkungsgrad [%] |
|---|---|---|
| I.1 (R = H) | 25 | 79 |
| | 12,5 | 84 |
| | 5 | 79 |
| | 2,5 | 58 |
| | 1,25 | 27 |
| I.2 (R = F) | 25 | 79 |
| | 12,5 | 90 |
| | 2,5 | 27 |
| | 1,25 | 0 |
| II.a (Pyrimethanil) | 250 | 0 |
| | 50 | 0 |
| | 25 | 0 |
| | 12,5 | 0 |
| | 6,25 | 0 |
| II.b (Mepanipyrim) | 250 | 48 |
| | 50 | 27 |
| | 25 | 0 |
| | 12,5 | 0 |
| | 6,25 | 0 |
| II.c (Cyprodinil) | 250 | 69 |
| | 50 | 0 |
| | 25 | 0 |
| | 12,5 | 0 |
| unbehandelte Kontrolle | -/- | 0 |

Aktivität der erfindungsgemäßen synergistischen Mischungen:

| Synergistische Mischung | | | Wirkungsgrad | |
|---|---|---|---|---|
| Wirkstoffe | ppm | Verhältnis | beobachtet | berechnet |
| I.1 + II.a | 5 + 50 | 1/10 | 90 | 79 |
| | 2,5 + 25 | 1/10 | 79 | 58 |
| | 1,25 + 12,5 | 1/10 | 58 | 27 |
| | 2,5 + 12,5 | 1/5 | 69 | 58 |
| I.1 + II.b | 25 + 250 | 1/10 | 95 | 89 |
| | 12,5 + 125 | 1/10 | 92 | 89 |
| | 2,5 + 25 | 1/10 | 84 | 58 |
| | 1,25 + 12,5 | 1/10 | 48 | 27 |
| | 1,25 + 6,25 | 1/5 | 58 | 27 |
| I.1 + II.c | 25 + 250 | 1/10 | 97 | 93 |
| | 12,5 + 125 | 1/10 | 95 | 84 |
| I.2 + II.a | 25 + 250 | 1/10 | 95 | 79 |
| | 2,5 + 25 | 1/10 | 79 | 27 |
| | 1,25 + 12,5 | 1/10 | 17 | 0 |
| | 2,5 + 12,5 | 1/5 | 74 | 27 |
| | 1,25 + 6,25 | 1/5 | 58 | 0 |
| I.2 + II.b | 25 + 250 | 1/10 | 95 | 89 |
| | 12,5 + 125 | 1/10 | 95 | 92 |
| | 2,5 + 25 | 1/10 | 90 | 27 |
| | 1,25 + 12,5 | 1/10 | 79 | 0 |
| | 2,5 + 12,5 | 1/5 | 69 | 27 |
| I.2 + II.c | 2,5 + 25 | 1/10 | 37 | 27 |
| | 1,25 + 12,5 | 1/10 | 17 | 0 |
| | 2,5 + 12,5 | 1/5 | 37 | 27 |

## Patentansprüche

1. Fungizide Mischung, enthaltend

   a) ein Oximethercarbonsäureamid der Formel I,

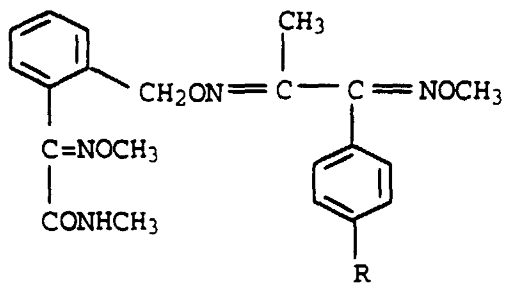

in der R für Wasserstoff oder Halogen steht
und

b) ein Pyrimidinderivat der Formel II,

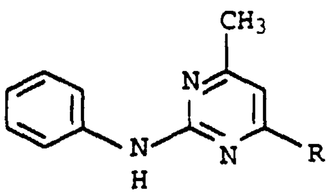

II

in der R für Methyl, Propin-1-yl oder Cyclopropyl steht,

in einer synergistisch wirksamen Menge.

2. Fungizide Mischung nach Anspruch 1, dadurch gekennzeichnet, daß das Gewichtsverhältnis der Verbindung I zu der Verbindung II 20:1 bis 0,1:2 beträgt.

3. Verfahren zur Bekämpfung von Schadpilzen, dadurch gekennzeichnet, daß man die Schadpilze, deren Lebensraum oder die von ihnen freizuhaltenden Pflanzen, Samen, Böden, Flächen, Materialien oder Räume mit einer Verbindung der Formel I gemäß Anspruch 1 und einer Verbindung der Formel II gemäß Anspruch 1 behandelt.

4. Verfahren nach Anspruch 3, dadurch gekennzeichnet, daß man die Verbindung I und die Verbindung II gleichzeitig gemeinsam oder getrennt oder nacheinander ausbringt.

5. Verfahren nach Anspruch 3, dadurch gekennzeichnet, daß man die Schadpilze, deren Lebensraum oder die von ihnen freizuhaltenden Pflanzen, Samen, Böden, Flächen, Materialien oder Raume mit 0,01 bis 0,5 kg/ha einer Verbindung I gemäß Anspruch 1 behandelt.

6. Verfahren nach Anspruch 3, dadurch gekennzeichnet, daß man die Schadpilze, deren Lebensraum oder die von ihnen freizuhaltenden Pflanzen, Samen, Böden, Flächen, Materialien oder Räume mit 0,1 bis 1,0 kg/ha einer Verbindung II gemäß Anspruch 1 behandelt.

7. Verwendung der Verbindungen 1 gemäß Anspruch 1 zur Herstellung von fungizid wirksamen synergistischen Mischungen gemäß Anspruch 1.

8. Verwendung der Verbindungen II gemaß Anspruch 1 zur Herstellung von fungizid wirksamen synergistischen Mischungen gemäß Anspruch 1.

**Claims**

1. A fungicidal mixture comprising

a) an oxime ether carboxamide of the formula I

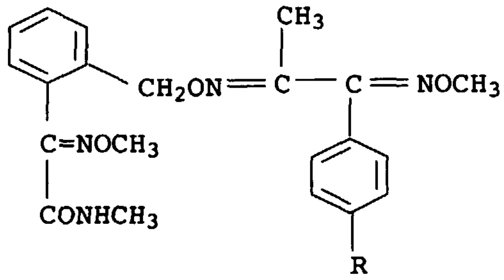

where R is hydrogen or halogen
and

b) a pyrimidine derivative of the formula II

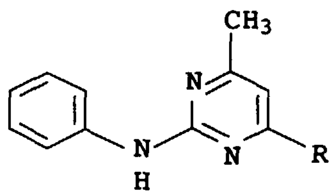

II

where R is methyl, propyn-1-yl or cyclopropyl,

in a synergistically active amount.

2. A fungicidal mixture as claimed in claim 1, wherein the weight ratio of the compound I to the compound II is 20:1 to 0.1:2.

3. A method of controlling harmful fungi, which comprises treating the harmful fungi, their environment, or the plants, seeds, soils, areas, materials or spaces to be kept free from them with a compound of the formula I as set forth in claim 1 and a compound of the formula II as set forth in claim 1.

4. A method as claimed in claim 3, wherein the compound I and the compound II are applied simultaneously together or separately or in succession.

5. A method as claimed in claim 3, wherein the harmful fungi, their environment, or the plants, seeds, soils, areas, materials or spaces to be kept free from them are treated with 0.01 to 0.5 kg/ha of a compound I as set forth in claim 1.

6. A method as claimed in claim 3, wherein the harmful fungi, their environment, or the plants, seeds, soils, areas, materials or spaces to be kept free from them are treated with 0.1 to 1.0 kg/ha of a compound II as set forth in claim 1.

7. The use of the compounds I as set forth in claim 1 for the preparation of fungicidally active synergistic mixtures as set forth in claim 1.

8. The use of the compounds II as set forth in claim 1 for the preparation of fungicidally active synergistic mixtures as set forth in claim 1.

## Revendications

1. Mélange fongicide contenant

a) un éther d'oxime-carboxamide de formule I

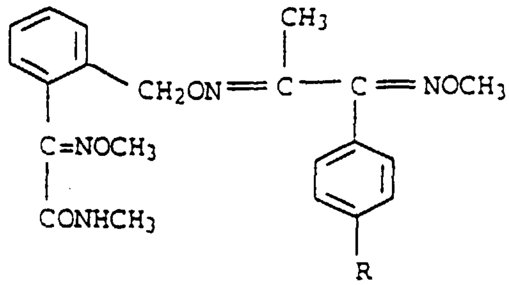

dans laquelle R représente l'hydrogène ou un halogène, et

b) un dérivé de la pyrimidine répondant à la formule II

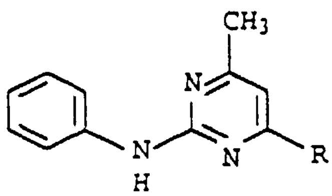

II

dans laquelle R représente un groupe méthyle, propyn-1-yle ou cyclopropyle, en quantité synergique efficace.

2. Mélange fongicide selon la revendication 1, caractérisé par le fait que les proportions relatives en poids entre le composé I et le composé II vont de 20 : 1 à 0,1 : 2.

3. Procédé pour combattre les mycètes nuisibles, caractérisé par le fait que l'on traite les mycètes, leur habitat ou les végétaux, semences, sols, aires, matériaux ou locaux qu'on veut protéger contre les mycètes par un composé de formule I selon la revendication 1 et un composé de formule II selon la revendication 1.

4. Procédé selon la revendication 3, caractérisé par le fait que l'on applique le composé I et le composé II en même temps, ensemble ou séparément, ou successivement.

5. Procédé selon la revendication 3, caractérisé par le fait que l'on traite les mycètes, leur habitat ou les plantes, semences, sols, aires, matériaux ou locaux qu'on veut protéger contre les mycètes par 0,01 à 0,5 kg/ha d'un composé I selon la revendication 1.

6. Procédé selon la revendication 3, caractérisé par le fait que l'on traite les mycètes, leur habitat ou les végétaux, semences, aires, sols, matériaux ou locaux qu'on veut protéger contre les mycètes par 0,1 à 1,0 kg/ha d'un composé II selon la revendication 1.

7. Utilisation des composés I selon la revendication 1 pour la préparation de mélanges fongicides à activité synergique selon la revendication 1.

8. Utilisation des composés II selon la revendication 1 pour la préparation des mélanges fongicides à activité synergique selon la revendication 1.